# EUROPEAN PATENT APPLICATION

(11) **EP 3 454 017 A1**
(43) Date of publication of application: **13.03.2019**
(21) Application number: 17190219.0
(22) Date of filing: 08.09.2017
(51) Int. Cl.: G01D 5/00

(54) **DEVICE AND METHOD FOR TRANSFERRING DATA FROM A TRANSMITTER TO A RECEIVER**

(71) Applicant: Vestel Elektronik Sanayi ve Ticaret A.S., 45030 Manisa (TR)
(72) Inventor: DÖNER,, Çagdas, 45030 Manisa (TR)
(74) Representative: Flint, Adam

(57) **Abstract**

A device (20) for transferring data from a transmitter to a receiver (50) that has a proximity sensor (54) has first and second targets (23, 24). The first and second targets (23, 24) are mounted on a rotatable member (25) to be at different distances from the axis of rotation (26). As the rotatable member (25) is rotated, the first and second targets (23, 24) may be brought into the proximity of the proximity sensor (54) of the receiver (50). The different distances of the first and second targets (23, 24) from the axis of rotation (26) of the rotatable member (25) cause the shortest distance of the first and second targets (23, 24) to the proximity sensor (54) to be different. Thus, a first data character can be represented by the shortest distance of the first target (23) to the proximity sensor (54) and a second data character can be represented by the shortest distance of the second target (24) to the proximity sensor (54).

## Description

### Technical Field

The present disclosure relates to a device and method for transferring data from a transmitter to a receiver.

### Background

Various arrangements for transferring data from one device to another device are known. Some arrangements use a cabled or wired network connection, such as over a wired network using Ethernet or the like. Other arrangements use a wireless network connection such as WiFi or the like. Yet other arrangements use modulated visible light (in so-called visible light communication or VLC). However, not all devices have the necessary functionality or capability of wired or wireless connectivity or VLC, or the environment in which the device is used may mean that wired or wireless connectivity or VLC is not possible or suitable.

### Summary

According to a first aspect disclosed herein, there is provided a device for transferring data from a transmitter to a receiver that has a proximity sensor, the device comprising:
a first target for which the proximity to the proximity sensor of a said receiver can be sensed;
a second target for which the proximity to the proximity sensor of a said receiver can be sensed;
a rotatable member to which the first and second targets are mounted for rotation therewith, the first and second targets being located at different distances from the axis of rotation of the rotatable member; and
a drive arrangement for driving rotational movement of the rotatable member;
wherein the device is arranged so that as the rotatable member is rotated, the first and second targets may be brought into the proximity of the proximity sensor of a said receiver, the different distances of the first and second targets from the axis of rotation of the rotatable member causing the shortest distance of the first target to the proximity sensor of a said receiver to be different from the shortest distance of the second target to the proximity sensor of a said receiver, whereby a first data character can be represented by the shortest distance of the first target to the proximity sensor of a said receiver and a second data character can be represented by the shortest distance of the second target to the proximity sensor of a said receiver.

In an example, the first target is mounted to the rotatable member by a first arm and the second target is mounted to the rotatable member by a second arm, the lengths of the first and second arms being different.

In an example, the first target and the second target are arranged on the rotatable member to be diametrically opposed to each other.

According to a second aspect disclosed herein, there is provided a device for transferring data from a transmitter to a receiver that has a proximity sensor, the device comprising:
at least one target for which the proximity to the proximity sensor of a said receiver can be sensed; and
a drive arrangement for driving movement of the at least one target;
wherein the device is arranged so that the at least one target can be selectively moved to be relatively closer to the proximity sensor of a said receiver to represent a first data character and relatively further away from the proximity sensor of a said receiver to represent a second, different data character.

According to a third aspect disclosed herein, there is provided a method of transferring data from a transmitter to a receiver that has a proximity sensor, the transferring using a device which comprises a first target for which the proximity to the proximity sensor of the receiver can be sensed, a second target for which the proximity to the proximity sensor of the receiver can be sensed, and a rotatable member to which the first and second targets are mounted for rotation therewith, the first and second targets being located at different distances from the axis of rotation of the rotatable member, the method comprising:
rotating the rotatable member so as to bring the first and second targets into the proximity of the proximity sensor of the receiver as necessary to transmit the data, the different distances of the first and second targets from the axis of rotation of the rotatable member causing the shortest distance of the first target to the proximity sensor of the receiver to be different from the shortest distance of the second target to the proximity sensor of the receiver, whereby a first data character is represented by the shortest distance of the first target to the proximity sensor of the receiver and a second data character is represented by the shortest distance of the second target to the proximity sensor of the receiver, such that the first target is brought closest to the proximity sensor to transmit a first character and the second target is brought closest to the proximity sensor to transmit a second character.

According to a fourth aspect disclosed herein, there is provided a method of transferring data from a transmitter to a receiver that has a proximity sensor, the transferring using a device which comprises at least one target for which the proximity to the proximity sensor of a said receiver can be sensed, the method comprising:
selectively moving the at least one target to be relatively closer to the proximity sensor of the receiver to represent a first data character and relatively further away from the proximity sensor of the receiver to represent a second, different data character.

There may also be provide in combination, a device as described above and a receiver that has a proximity sensor.

### Brief Description of the Drawings

To assist understanding of the present disclosure and to show how embodiments may be put into effect, reference is made by way of example to the accompanying drawings in which:
Figure 1 shows schematically a first example of a device for transferring data from a transmitter to a receiver;
Figure 2 shows schematically a second example of a device for transferring data from a transmitter to a receiver; and
Figure 3 shows schematically the representation of data bits by the device of Figure 2.

### Detailed Description

In broad terms, examples of embodiments of the present disclosure enable transfer of data from a first device to a second device by using a proximity sensor of the receiver to detect the proximity of one or more "targets" of the first device or a separate device associated with the first device. The device that has the one or more targets has a drive arrangement to move the one or more targets, in particular to move the one or more targets relative to the proximity sensor of the receiver. The different proximity of the one or more targets to the proximity sensor of the receiver can be used to convey different data characters.

The first device is often referred to herein as a "transmitter" and, correspondingly, the second device is often referred to herein as a "receiver". However, in some examples the same functionality may be provided for each of the first and second devices, such that data can be transferred from the first device to the second device and vice versa.

A proximity sensor is a sensor that is able to detect the presence of nearby objects or "targets" without any physical contact. Many different types of proximity sensor that are suitable for use herein are known. In some cases, the particular type of proximity sensor requires a particular type of target and vice versa. For example, a capacitive sensor might be suitable for a plastics target whereas an inductive proximity sensor requires a metal target. A photoelectric proximity sensor may be used for many different types of target, the photoelectric proximity sensor having for example a photodiode or other light emitter that emits an electromagnetic field or a beam of electromagnetic radiation (e.g. infrared), and looks for changes in the field or return signal. The maximum distance that a proximity sensor can detect is often referred to as the "nominal range". Some proximity sensors allow the nominal range to be adjusted. Some proximity sensors are capable of reporting (i.e. measuring) the graduated detection distance.

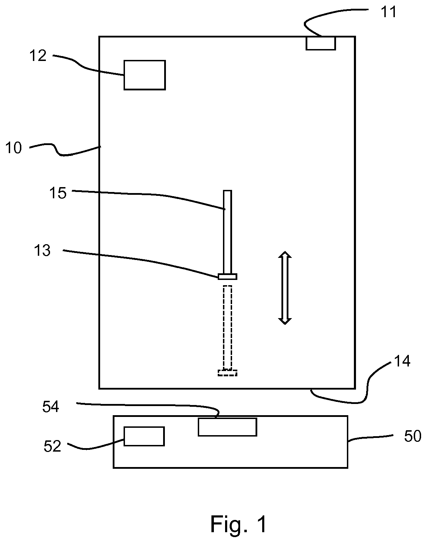

Referring now to Figure 1, there is shown a first example of a device 10 for transferring data from a transmitter to a receiver 50. The device 10 may be provided as part of the transmitter. Alternatively, the device 10 may be provided separately of the transmitter. The device 10 has a data connector 11 which enables data to be transferred to the device 10 from a separate transmitter or some other source of data. The device 10 in this example has a processor, data storage, etc. 12 for controlling operation of the device 10, storing of data, etc. The receiver 50 has a processor, data storage, etc. 52 for controlling operation of the receiver 50, storing of data, etc.

The receiver 50 has a proximity sensor 54. The device 10 has a target 13. As discussed briefly above, the target 13 and the proximity sensor 54 are "matched" so that the proximity sensor 54 can sense the proximity of the target 13. In some examples, the proximity sensor 54 can effectively measure the proximity (i.e. the distance) of the target 13 to the proximity sensor 54.

The target 13 can be moved back and forth so as to be relatively closer to and relatively further from an edge 14 of the device 10 and therefore relatively closer to and relatively further from the proximity sensor 54 of the receiver 50 when the receiver 50 is near (the edge 14 of) the device 10. The device 10 may have a motor (not shown) or the like which drives the movement of the target 13. The motor may be for example a stepper motor, a servomotor, etc. In this example, the target 13 is mounted on or carried by an arm or rod 15 which may be connected to the motor by an appropriate linkage to drive the reciprocal movement of the target 13.

Data can be transferred by the device 10 to the receiver 50 as follows. When the target 13 is relatively far from the proximity sensor 54 of the receiver 50 as sensed by the proximity sensor 54 (as shown by solid lines for the target 13 in Figure 1), this may be taken by the receiver 50 to represent a first character. On the hand, when the target 13 is relatively close to the proximity sensor 54 of the receiver 50 as sensed by the proximity sensor 54 (as shown by dashed lines for the target 13 in Figure 1), this may be taken by the receiver 50 to represent a second character. For example, if the data is being transmitted in the form of bits, the first character may be a 1 and the second character may be a 0 (or vice versa). Accordingly, the target 13 is moved back and forth so as to cause different characters (e.g. different bits) to be effectively transmitted to the receiver 50.

The receiver 50 may need some arrangement so as to "know" when a character is intended to be transmitted. A number of options are available. For example, a time division process may be used in which movement of the target 13 may be synchronised with readings that are taken by the proximity sensor 54 of the receiver 50. In such a case, readings are taken at specific time intervals and the (relative) distance of the target 13 to the proximity sensor 54 is measured at those time intervals to obtain the characters that are transmitted. As another example, the proximity sensor 54 of the receiver 50 may take readings when the target 13 is at its extreme positions (i.e. closest to and furthest from the proximity sensor 54). In such a case, as a preliminary step prior to transmitting characters, the target 13 may be moved back and forth a number of times in order to allow a calibration of the closest and furthest distances to be carried out.

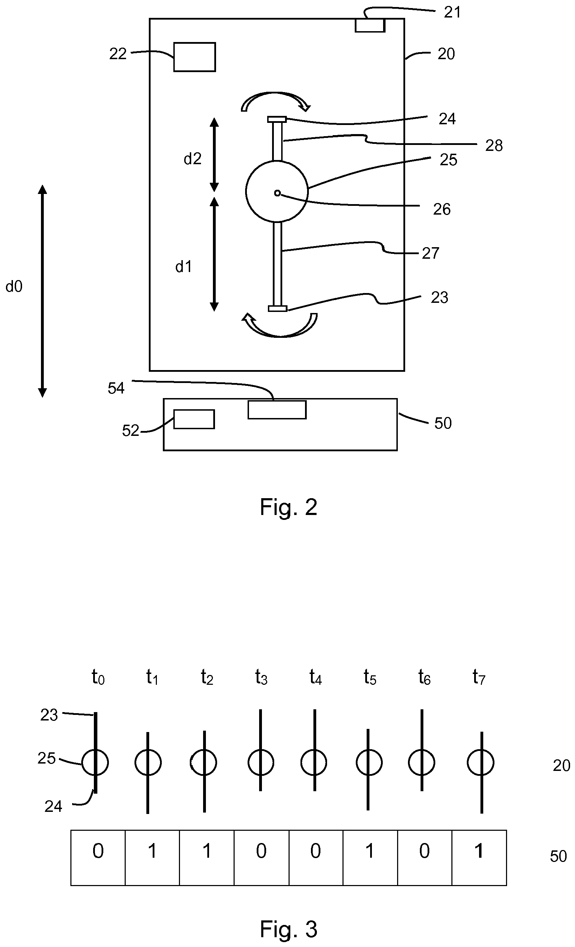

Referring now to Figure 2, there is shown a second example of a device 20 for transferring data from a transmitter to a receiver 50. The device 20 may again be provided as part of the transmitter. Alternatively, the device 20 may again be provided separately of the transmitter. The device 20 has a data connector 21 which enables data to be transferred to the device 20 from a separate transmitter or some other source of data. The device 20 in this example has a processor, data storage, etc. 22 for controlling operation of the device 20, storing of data, etc. The receiver 50 again has a processor, data storage, etc. 52 for controlling operation of the receiver 50, storing of data, etc.

The receiver 50 has a proximity sensor 54. The device 20 of this example has two targets 23, 24. As discussed briefly above, the targets 23, 24 and the proximity sensor 54 are "matched" so that the proximity sensor 54 can sense the proximity of the targets 23, 24. In some examples, the proximity sensor 54 can effectively measure the proximity (i.e. the distance) of the targets 23, 24 to the proximity sensor 54.

In this example, the targets 23, 24 are mounted on a rotatable member 25 which can be rotated about an axis of rotation 26 which is perpendicular to the plane of the device 20 as shown in Figure 2. The device 20 may have a motor (not shown) or the like which drives the movement of the targets 23, 24. The motor may be for example a stepper motor, a servomotor, etc.

The targets 23, 24 are mounted on or integral with respective arms or rods 27, 28 which are mounted on or integral with the rotatable member 25. The rods 27, 28 are of different lengths such that the targets 23, 24 are located at different distances from the axis of rotation 26 of the rotatable member 25.

Data can be transferred by the device 20 to the receiver 50 as follows. When say the first target 23 is relatively close to the proximity sensor 54 of the receiver 50 as sensed by the proximity sensor 54 (as in the orientation shown in Figure 2), this may be taken by the receiver 50 to represent a first character. On the hand, when the second target 24 is relatively close to the proximity sensor 54 of the receiver 50 as sensed by the proximity sensor 54, this may be taken by the receiver 50 to represent a second character. For example, if the data is being transmitted in the form of bits, the first character may be a **1** and the second character may be a **0** (or vice versa). Accordingly, in this example, the rotatable member 25 is rotated to bring either the first target 23 or the second target 24 close to the proximity sensor 54 of the receiver so as to cause different characters (e.g. different bits) to be effectively transmitted to the receiver 50.

As with the first example, the receiver 50 may need some arrangement so as to "know" when a character is intended to be transmitted. A number of options are available. For example, a time division process may be used in which rotational movement of the rotatable member 25 may be synchronised with readings that are taken by the proximity sensor 54 of the receiver 50. In such a case, readings are taken at specific time intervals, with the rotatable member 25 being rotated as necessary to bring the relevant first target 23 or second target 24 close to the proximity sensor 54 to effectively cause the corresponding character to be transmitted at those at specific time intervals. As another example, as a preliminary step prior to transmitting characters, the rotatable member 25 may be rotated to successively bring the targets 23, 24 close to the proximity sensor 54 in order to allow a calibration of the distances of the targets 23, 24 to be carried out.

As a specific example, in an initial calibration step, the distance d0 of the proximity sensor 54 to the (centre of the) rotatable member 25 may be measured by the proximity sensor 54. Then in use, when transmitting characters, after the rotatable member 25 has been rotated to bring say the first target 23 carried by the long arm 27 having a length of d1 close to the proximity sensor 54, the distance (d0 - d1) of the first target 23 to the proximity sensor 54 is measured by the proximity sensor 54. This causes a first character effectively to be transmitted, such as a **1** in the case of bits being transmitted. Likewise, after the rotatable member 25 has been rotated to bring the second target 23 carried by the short arm 28 having a length of d2 close to the proximity sensor 54, the distance (dO - d2) of the second target 24 to the proximity sensor 54 is measured by the proximity sensor 54. This causes a second character effectively to be transmitted, such as a **0** in the case of bits being transmitted. The processor 52 of the receiver 50 may be arranged to interpret absolute distances or relative distances of the targets 23, 24 to the proximity sensor 54 (with in this example (d0 - d2) > (d0 - d1) and the shorter distance (d0 - d1) representing a **1** and the longer distance (d0 - d2) representing a **0**).

The data that is transmitted may in general be of any type and for any purpose. The data may be for example network or login credentials, which enable once device to obtain a network connection to another device. The data may be other data, such as commands that are to be passed from a transmitter to a receiver, data representing sensor readings that are taken by the transmitter and are to be passed to the receiver, etc.

In another example, the data may be to represent ASCII (American Standard Code for Information Interchange) characters. To illustrate this, ASCII codes for the three letters **e, f, g** are shown as table 1 below:

**Table 1**

| Char | ASCII Decimal | ASCII Hex | ASCII Binary |
|---|---|---|---|
| e | 101 | 0x65 | 01100101 |
| f | 102 | 0x66 | 01100110 |
| g | 103 | 0x67 | 01100111 |

So, for example, to transmit the character **e,** it is necessary to transmit the eight bits of the byte 01100101 in sequence. To achieve this, the rotatable member 25 is rotated as necessary to bring the first target 23 on the long arm, 27 or the second target 24 on the short arm 28 close to the proximity sensor 54 to transmit a **1** or a **0** respectively. This is illustrated in Figure 3, showing eight time intervals to to t₇ over which the eight bits for the ASCII character **e** are transmitted. At the first time interval to, a **0** is to be transmitted. Accordingly, the rotatable member 25 of the device 20 is rotated as necessary to bring the second target 24 carried by the short arm 28 close to the proximity sensor 54. At the second time interval t₁, a **1** is to be transmitted. Accordingly, the rotatable member 25 of the device 20 is rotated as necessary to bring the first target 23 carried by the long arm 27 close to the proximity sensor 54. At the third time interval t₂, a **1** is again to be transmitted. Accordingly, in this case, no rotation of the rotatable member 25 is required for this time interval and data transmission. The subsequent bits can be transferred by rotating the rotatable member 25 and taking proximity readings with the proximity sensor 54 as required and illustrated in Figure 3.

For other characters, such as Turkish or Greek characters or other special characters, two or more bytes may be transmitted, similarly to a UTF-8 (Unicode Transformation Format - 8) system.

The device 10 may be used to transmit data from many different types of transmitter device to many different types of receiver device. The transmitter and/or receiver devices may be for example mobile or smart phones, IoT (internet of things) devices, etc., etc. In general, as used herein, an IoT device is a device that has an addressable interface (e.g. an Internet protocol (IP) address, a Bluetooth identifier (ID), a near-field communication (NFC) ID, etc.) and can transmit information to one or more other devices. IoT devices may in general include or be incorporated in for example refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc. IoT devices may be deployed in locations or situations where there is no mains powers supply or the IoT device may not suitable for a mains power supply, including in for example the case that the IoT device is a sensor for temperature, humidity, pressure, light levels, pollution levels, etc. The device 10 has particular usefulness where the transmitter and/or receiver devices have no network or light source that can be used to transmit data.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. For example, a handshaking timeout process may be used for each bit that is transferred. As another example, there may be more than two targets provided with the rotatable member of the second example described above, possibly each located at a different respective distance from the axis of rotation of the rotatable member in order to be able to transmit more than simply bits (**1**s and **0**s).

Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A device for transferring data from a transmitter to a receiver that has a proximity sensor, the device comprising:
a first target for which the proximity to the proximity sensor of a said receiver can be sensed;
a second target for which the proximity to the proximity sensor of a said receiver can be sensed;
a rotatable member to which the first and second targets are mounted for rotation therewith, the first and second targets being located at different distances from the axis of rotation of the rotatable member; and
a drive arrangement for driving rotational movement of the rotatable member;
wherein the device is arranged so that as the rotatable member is rotated, the first and second targets may be brought into the proximity of the proximity sensor of a said receiver, the different distances of the first and second targets from the axis of rotation of the rotatable member causing the shortest distance of the first target to the proximity sensor of a said receiver to be different from the shortest distance of the second target to the proximity sensor of a said receiver, whereby a first data character can be represented by the shortest distance of the first target to the proximity sensor of a said receiver and a second data character can be represented by the shortest distance of the second target to the proximity sensor of a said receiver.

2. A device according to claim 1, wherein the first target is mounted to the rotatable member by a first arm and the second target is mounted to the rotatable member by a second arm, the lengths of the first and second arms being different.

3. A device according to claim 1 or claim 2, wherein the first target and the second target are arranged on the rotatable member to be diametrically opposed to each other.

4. A device for transferring data from a transmitter to a receiver that has a proximity sensor, the device comprising:
at least one target for which the proximity to the proximity sensor of a said receiver can be sensed; and
a drive arrangement for driving movement of the at least one target;
wherein the device is arranged so that the at least one target can be selectively moved to be relatively closer to the proximity sensor of a said receiver to represent a first data character and relatively further away from the proximity sensor of a said receiver to represent a second, different data character.

5. A method of transferring data from a transmitter to a receiver that has a proximity sensor, the transferring using a device which comprises a first target for which the proximity to the proximity sensor of the receiver can be sensed, a second target for which the proximity to the proximity sensor of the receiver can be sensed, and a rotatable member to which the first and second targets are mounted for rotation therewith, the first and second targets being located at different distances from the axis of rotation of the rotatable member, the method comprising:
rotating the rotatable member so as to bring the first and second targets into the proximity of the proximity sensor of the receiver as necessary to transmit the data, the different distances of the first and second targets from the axis of rotation of the rotatable member causing the shortest distance of the first target to the proximity sensor of the receiver to be different from the shortest distance of the second target to the proximity sensor of the receiver, whereby a first data character is represented by the shortest distance of the first target to the proximity sensor of the receiver and a second data character is represented by the shortest distance of the second target to the proximity sensor of the receiver, such that the first target is brought closest to the proximity sensor to transmit a first character and the second target is brought closest to the proximity sensor to transmit a second character.

6. A method of transferring data from a transmitter to a receiver that has a proximity sensor, the transferring using a device which comprises at least one target for which the proximity to the proximity sensor of a said receiver can be sensed, the method comprising:
selectively moving the at least one target to be relatively closer to the proximity sensor of the receiver to represent a first data character and relatively further away from the proximity sensor of the receiver to represent a second, different data character.

7. In combination, a device according to any of claims 1 to 4 and a receiver that has a proximity sensor.
